# EUROPEAN PATENT SPECIFICATION

(11) **EP 3 968 587 B1**
(45) Date of publication and mention of the grant of the patent: **09.08.2023**
(21) Application number: 20844624.5
(22) Date of filing: 23.07.2020
(51) Int. Cl.: H04L 49/25, H04L 49/00, H04L 69/22

(54) **MESSAGE PROCESSING METHOD, SWITCH, AND COMPUTER-READABLE STORAGE MEDIUM**
NACHRICHTENVERARBEITUNGSVERFAHREN, SCHALTER UND COMPUTERLESBARES SPEICHERMEDIUM
PROCÉDÉ DE TRAITEMENT DE MESSAGE, COMMUTATEUR ET SUPPORT DE STOCKAGE LISIBLE PAR ORDINATEUR

(30) Priority: 24.07.2019 CN 201910673667
(43) Date of publication of application: 16.03.2022
(73) Proprietor: ZTE Corporation, Shenzhen, Guangdong 518057 (CN)
(72) Inventor: WANG, Xin, Shenzhen, Guangdong 518057 (CN)
(74) Representative: Zoli, Filippo
(86) International application number: PCT/CN2020/103789
(87) International publication number: WO 2021/013218

(56) References cited:
- WO-A1-2012/006190
- CN-A- 104 767 676
- CN-A- 106 161 115
- CN-A- 109 347 851
- US-A1- 2011 299 534
- US-A1- 2013 343 385
- US-A1- 2013 343 385

## Description

### TECHNICAL FIELD

The embodiments of the present invention relates to the technical field of switch message management, and more particularly, to a message processing method, a switch and a computer-readable storage medium.

### BACKGROUND

Virtual logical devices (VLDs) are a kind of "one-to-many" virtualization technology. The "one-to-many" virtualization technology of the data center rack switch is to virtualize multiple logical devices by logically dividing one physical rack device. The logical switch means that, on a physical switch, the resources in the switch are divided into different subsets according to a certain resource division principle so that the physical switch is simulated as multiple switches that execute separate switching tasks.

Virtual devices are used as standalone devices, and the network formed by virtual devices can effectively isolate different users and services on the same device. A data center switch can support 16 logical switches, which are called VLDO to VLD15, respectively. Each of the VLDS corresponds to one target ID address.

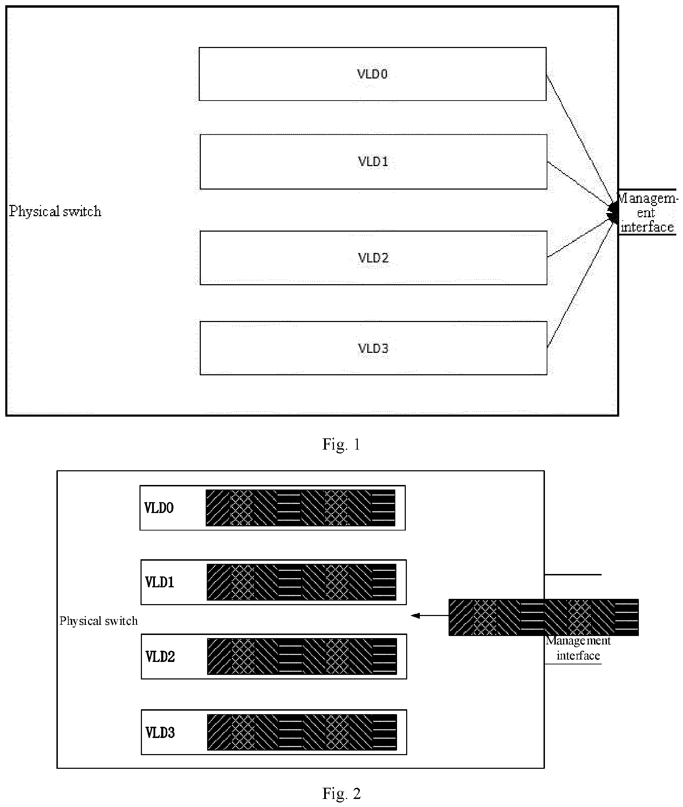

Currently, the management interface of the switch is located on the panel of the main control board, one main control board has only one management interface, and multiple logical switches are run on one physical switch simultaneously. As show in FIG. 1, four logical switches VLD0, VLD1, VLD2 and VLD3 are run on the same physical switch simultaneously, and the messages of VLD0, VLD1, VLD2 and VLD3 are communicated through the same management interface. Meanwhile, as shown in FIG. 2, upon receiving a message, the management interface transmits the message to all VLDs (i.e., VLD0, VLD1, VLD2 and VLD3) for processing. Thus, there are certain potential security hazards in the message communication of the management interface in the existing technology. An example of a physical server hosting several virtual switches is described in document US2011299534.

### SUMMARY

Embodiments of the present invention provide a message processing method, a switch and a computer-readable storage medium to mainly solve the technical problem in the existing technology that there are certain potential security hazards in the communication of the management interface.

In order to solve the above technical problem, an embodiment of the present invention provides a message processing method, applied to a switch having one management interface and at least two virtual logical devices, the message processing method including:
parsing, by the management interface in response to receiving a message, a plurality of sub-messages contained in the message to obtain a plurality of target IP addresses, determining virtual logical devices according to the plurality of target IP addresses, and transmitting the sub-messages to the corresponding virtual logical devices; and
receiving, by the virtual logical devices, the sub-messages from the management interface.

An embodiment of the present invention further provides a switch, including a processor, a memory and a communication bus.

The communication bus is configured to realize the communication between the processor and the memory; and
the processor is configured to execute one or more programs stored in the memory so as to implement the steps in the message processing method described above.

An embodiment of the present invention further provides a computer-readable storage medium storing one or more programs which, when executed by one or more processors, cause the one or more processors to implement the steps in the message processing method described above.

The embodiments of the present invention have the following beneficial effects.

In the message processing method, the switch and the computer-readable storage medium according to the embodiments of the present invention, in response to receiving a message, a management interface parses sub-messages contained in the message to obtain target IP addresses, determines virtual logical devices according to the target IP addresses, and transmits the sub-messages to the corresponding virtual logical devices; and, the virtual logical devices receive the sub-messages from the management interface, so that the problem in the existing technology that there are certain potential security hazards in the communication of the management interface is solved. In other words, in the message processing method, the switch and the computer-readable storage medium according to the embodiments of the present invention, by transmitting, by the management interface, the sub-messages contained in the message to the corresponding virtual logical devices, the message isolation of the virtual logical devices is realized, the occurrence of a phenomenon that the messages are miscellaneous and low in security since the messages of the virtual logical devices are not isolated is avoided, and the security of the message communication of the management interface of the whole switch is greatly improved.

Other features and corresponding beneficial effects of the embodiments of the present invention will be described in the later part of the specification, and it should be understood that at least some of the beneficial effects will become apparent from the records in the specification of the present invention.

### BRIEF DESCRIPTION OF DRAWINGS

The present invention will be further described below by embodiments with reference to the accompanying drawings, in which:
FIG. 1 is a schematic structural diagram of the virtualization of four VLDs by a switch;
FIG. 2 is a schematic diagram of the message communication of a management interface of the switch shown in FIG. 1;
FIG. 3 is a basic flowchart of a message processing method according to an embodiment of the present invention;
FIG. 4-1 is a first schematic diagram of a first unicast message communication of the management interface of the switch according to an embodiment of the present invention;
FIG. 4-2 is a second schematic diagram of the first unicast message communication of the management interface of the switch according to an embodiment of the present invention;
FIG. 4-3 is a third schematic diagram of the first unicast message communication of the management interface of the switch according to an embodiment of the present invention;
FIG. 4-4 is a fourth schematic diagram of the first unicast message communication of the management interface of the switch according to an embodiment of the present invention;

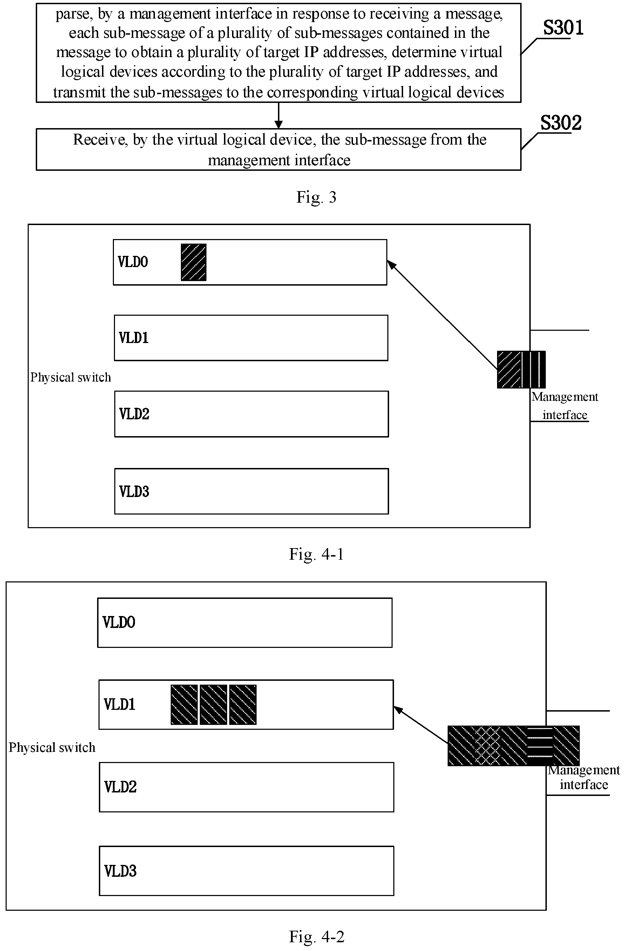

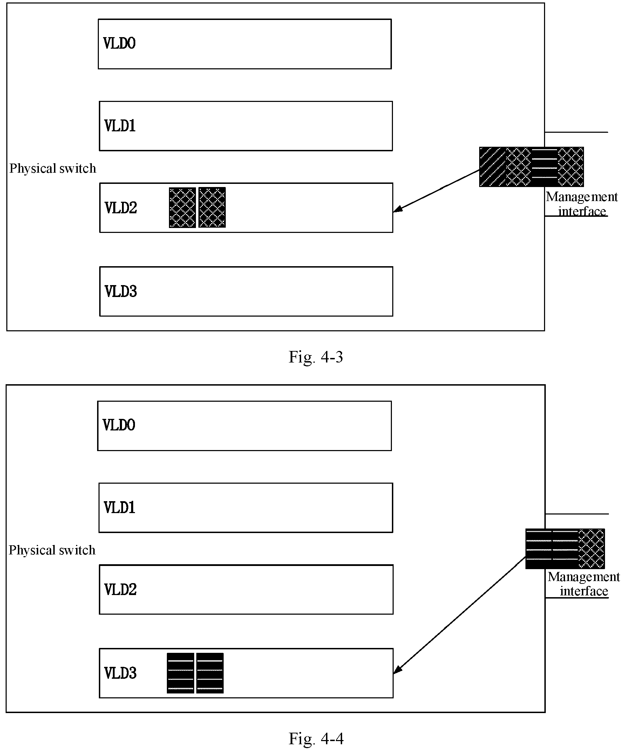

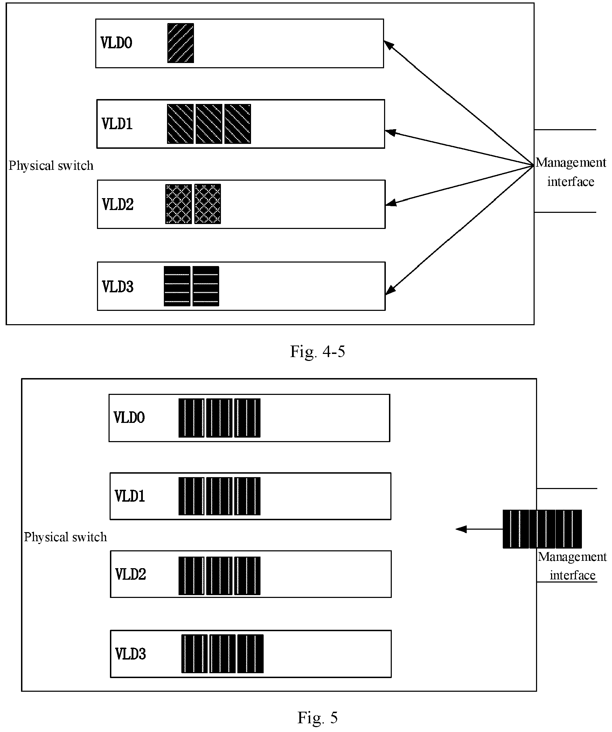

FIG. 4-5 is a fifth schematic diagram of the first unicast message communication of the management interface of the switch according to an embodiment of the present invention;
FIG. 5 is a schematic diagram of a first broadcast message communication of the management interface of the switch according to an embodiment of the present invention;

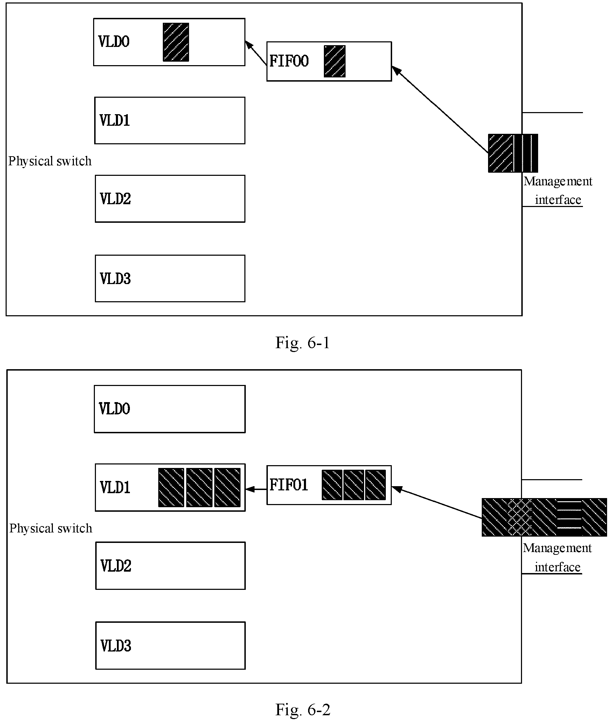

FIG. 6-1 is a first schematic diagram of a second unicast message communication of the management interface of the switch according to an embodiment of the present invention;
FIG. 6-2 is a second schematic diagram of the second unicast message communication of the management interface of the switch according to an embodiment of the present invention;

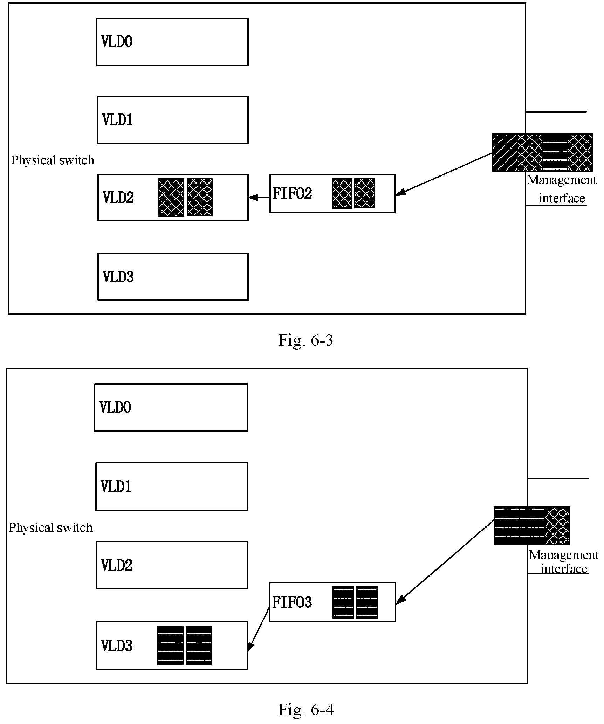

FIG. 6-3 is a third schematic diagram of the second unicast message communication of the management interface of the switch according to an embodiment of the present invention;
FIG. 6-4 is a fourth schematic diagram of the second unicast message communication of the management interface of the switch according to an embodiment of the present invention;

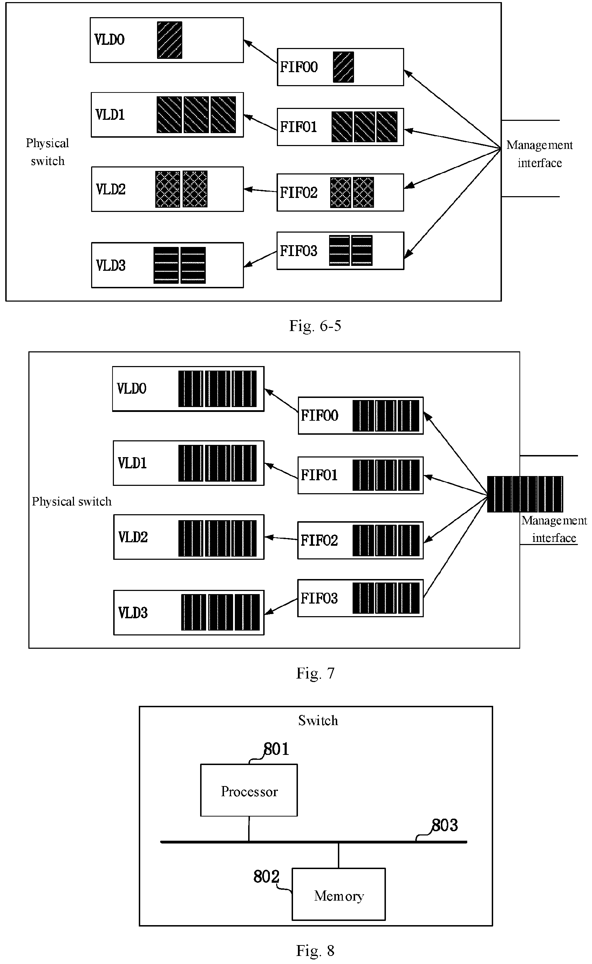

FIG. 6-5 is a fifth schematic diagram of the second unicast message communication of the management interface of the switch according to an embodiment of the present invention;
FIG. 7 is a schematic diagram of a second broadcast message communication of the management interface of the switch according to an embodiment of the present invention; and
Fig. 8 is a schematic structural diagram of a switch according to an embodiment of the present invention.

### DETAILED DESCRIPTION

In order to make the objectives, technical schemes and advantages of the present invention clearer, the embodiments of the present invention will be further described in detail below by embodiments with reference to the accompanying drawings. It should be understood that the embodiments to be described herein are merely for explaining the present invention, rather than limiting the present invention.

In order to solve the problem in the existing technology that there are certain potential security hazards in the communication of the management interface, in an embodiment of the present invention, a message processing method is provided, including: upon receiving a message, a management interface parses sub-messages contained in the message to obtain target IP addresses, determines virtual logical devices according to the target IP addresses, and transmits the sub-messages to the corresponding virtual logical devices; and, the virtual logical devices receive the sub-messages from the management interface. FIG. 3 is a basic flowchart of the message processing method provided in this embodiment, as shown in FIG. 3, the method includes the following steps of S301 and S302.

At S301, upon receiving a message, a management interface parses sub-messages contained in the message to obtain target IP addresses, determines virtual logical devices according to the target IP addresses, and transmits the sub-messages to the corresponding virtual logical devices.

In this embodiment, the message includes at least one of a unicast message or a broadcast message.

It should be understood that the unicast is characterized by the communication between a single transmitter and a receiver through a network, where a server responds to a request from a client in time, and transmits different data according to different requests from each client, thereby realizing personalized services. The broadcast is characterized by the "one-to-all" communication mode between hosts. The network unconditionally copies and forwards the signal transmitted by each host, and all hosts can receive all information (whether it is needed or not). The network device is simple, it is easy for maintenance, the cost for network deployment is low, and the traffic load of the server is very low since the server does not separately transmit data to each client.

It is to be noted that only two common messages are listed here, but the present invention is not limited to the two forms of messages. For example, there may be a multicast message. The multicast is characterized by the communication between a transmitter and multiple receivers, and is between the unicast and the broadcast.

In some examples, upon receiving a unicast message, the management interface parses sub-messages contained in the unicast message to obtain a target IP address, transmits the sub-messages with the target IP address to a virtual logical device corresponding to the target IP address, and discards the sub-messages without the target IP address.

It should be understood that, for a unicast message, the sub-messages in the unicast message can be parsed to obtain a target IP address; and then, the sub-messages with the IP address are transmitted to a virtual logical device corresponding to the target IP address, while the sub-messages without the target IP address are directly discarded or processed in other ways. In other words, only the sub-messages that need be transmitted to the virtual logical device are transmitted, and the sub-messages that need not be transmitted to the virtual logical device are discarded, avoiding the tedious operation that the virtual logical device will discard the sub-messages even if the sub-messages are transmitted to the virtual logical device. In order to facilitate better understanding, the reference may be made to FIGS. 4-1 to 4-5, which are still based on FIG. 1 where four logical switches VLD0, VLD1, VLD2 and VLD3 are run on the same physical switch. FIG. 4-1 is a schematic diagram of receiving a message by VLD0; FIG. 4-2 is a schematic diagram of receiving a message by VLD1; FIG. 4-3 is a schematic diagram of receiving a message by VLD2; FIG. 4-4 is a schematic diagram of receiving a message by VLD3; and FIG. 4-5 is a schematic diagram of receiving a message by VLD0, VLD1, VLD2 and VLD3.

In other examples, upon receiving a broadcast message, the management interface parses sub-messages contained in the broadcast message to obtain at least two target IP addresses, determines, according to the at least two target IP addresses, virtual logical devices to which the sub-messages are to be transmitted, and transmits the sub-messages to the corresponding virtual logical devices.

It should be understood that, for a broadcast message, sub-messages contained in the broadcast message can be parsed to obtain at least two target IP addresses, virtual logical devices to which the sub-messages are to be transmitted are determined according to the IP addresses, and the sub-messages are transmitted to the corresponding virtual logical devices. In other words, according to the target IP addresses parsed from the sub-messages in the broadcast message, the sub-messages can be correspondingly transmitted to the virtual logical devices, avoiding the occurrence of a phenomenon that the messages of the virtual logical devices are not isolated and low in security since the sub-messages in the broadcast message are transmitted to all the virtual logical devices. In order to facilitate better understanding, the reference may be made to FIG. 5, which is still based on FIG. 1 where four logical switches VLD0, VLD1, VLD2 and VDL3 are run on the same physical switch.

In other examples, upon receiving a multicast message, the management interface parses sub-messages contained in the multicast message to obtain at least two target IP addresses, determines, according to the at least two target IP addresses, virtual logical devices to which the sub-messages are to be transmitted, transmits the sub-messages to the corresponding virtual logical devices, and discards the sub-messages without the target IP addresses.

In this embodiment, before receiving, by the virtual logical devices, the sub-messages from the management interface, the message processing method further includes: creating corresponding sub-message queues FIFO for the at least two virtual logical devices, respectively. That is, each virtual logical device corresponds to one sub-message queue FIFO. It should be understood that the sub-message queues FIFO are configured to receive the sub-messages from the management interface so that it is convenient for the virtual logical devices to manage the messages; and, the sub-message queues FIFO follows a rule that the sub-message received first is processed first.

At S302, the virtual logical devices receive the sub-messages from the management interface.

In this embodiment, optionally, the sub-messages from the management interface are received by the sub-message queues FIFO of the virtual logical devices. For better understanding, reference may be made to FIGS. 6-1 to 6-5, wherein FIG. 6-1 is based on FIG. 4-1 where the sub-messages from the management interface are received by the sub-message queue FIFO0 of the virtual logical device; FIG. 6-2 is based on FIG. 4-2 where the sub-messages from the management interface are received by the sub-message queue FIFO1 of the virtual logical device; FIG. 6-3 is based on FIG. 4-3 where the sub-messages from the management interface are received by the sub-message queue FIFO2 of the virtual logical device; FIG. 6-4 is based on FIG. 4-4 where the sub-messages from the management interface are received by the sub-message queue FIFO3 of the virtual logical device; and, FIG. 6-5 is based on FIG. 4-5 where the sub-messages from the management interface are received by the sub-message queues FIFO0, FIFO1, FIFO2 and FIFO3 of the virtual logical devices. The reference may also be made to FIG. 7, which is based on FIG. 5 where the sub-messages from the management interface are received by the sub-message queues FIFO of the virtual logical devices.

In this embodiment, after receiving, by the sub-message queues FIFO of the virtual logical devices, the sub-messages from the management interface, the message processing method further includes: prioritizing the received sub-messages, the higher the importance of the sub-message, the higher the corresponding priority; and, adjusting the order of the sub-messages in the sub-message queues FIFO according to the prioritization.

It should be understood that the virtual logical devices can determine the priorities of the sub-messages according to the importance of the received sub-messages. The higher the importance of the sub-message is, the higher the corresponding priority is. For example, it is assumed that the sub-message queues FIFO include a sub-message 1, a sub-message 2, a sub-message 3, a sub-message 4 and a sub-message 5 which are received successively. Generally, the sub-messages are processed in an order of the sub-message 1, the sub-message 2, the sub-message 3, the sub-message 4 and the sub-message 5. However, if it is assumed that the sub-messages are prioritized as the sub-message 2, the sub-message 3, the sub-message 1 and the sub-message 4, the order of the sub-messages in the sub-message queues FIFO is the sub-message 2, the sub-message 3, the sub-message 1 and the sub-message 4, that is, the sub-messages are processed in an order of the sub-message 2, the sub-message 3, the sub-message 1 and the sub-message 4. Thus, it is ensured that the important sub-messages can be processed in time, and the flexibility of message processing is improved.

In this embodiment, optionally, after receiving, by the virtual logical devices, the sub-messages from the management interface, the message processing method further includes: verifying the sub-messages to obtain a result of verification.

It should be understood that the virtual logical devices verify the sub-messages to determine whether the received sub-messages are desired sub-messages in order to further improve the accuracy of the received sub-messages.

In this embodiment, optionally, when the result of verification is PASSED, the sub-messages are processed.

It should be understood that the result of verification obtained by verifying the sub-messages by the virtual logical devices has two situations. The first situation is that the result of verification is PASSED. In this situation, the sub-messages can be directly processed. Optionally, the message is processed according to the type of the message and the protocol. The second situation is that the result of verification is FAILED. In this situation, the sub-messages can be discarded or received again, or an error can be reported, or the like.

In the message processing method according to this embodiment of the present invention, upon receiving a message, a management interface parses sub-messages contained in the message to obtain target IP addresses, determines virtual logical devices according to the target IP addresses, and transmits the sub-messages to the corresponding virtual logical devices; and, the virtual logical devices receive the sub-messages from the management interface, so that the problem in the existing technology that there are certain potential security hazards in the communication of the management interface is solved. In other words, in the message processing method according to this embodiment of the present invention, the message isolation of the virtual logical devices is realized, the occurrence of a phenomenon that the messages are miscellaneous and low in security since the messages of the virtual logical devices are not isolated is avoided, and the security of the message communication of the management interface of the whole switch is greatly improved.

In order to solve the problem in the existing technology that there are certain potential security hazards in the communication of the management interface, in an embodiment of the present invention, a switch is provided. As shown in FIG. 8, the switch includes a processor 801, a memory 802 and a communication bus 803.

In this embodiment, the communication bus 803 is configured to realize the communication between the processor 801 and the memory 802, and the processor 801 is configured to execute one or more programs stored in the memory 802 to implement the following steps:
parsing, by a management interface upon receiving a message, sub-messages contained in the message to obtain target IP addresses, determining virtual logical devices according to the target IP addresses, and transmitting the sub-messages to the corresponding virtual logical devices; and,
receiving, by the virtual logical devices, the sub-messages from the management interface.

It is to be noted that the switch in this embodiment has one management interface and at least two virtual logic devices. It should be understood that, in practical applications, the number of the virtual logical devices can be flexibly adjusted according to the specific application scenario.

In this embodiment, the message includes at least one of a unicast message or a broadcast message.

It should be understood that the unicast is characterized by the communication between a single transmitter and a receiver through a network, where a server responds to a request from a client in time, and transmits different data according to different requests from each client, thereby realizing personalized services. The broadcast is characterized by the "one-to-all" communication mode between hosts. The network unconditionally copies and forwards the signal transmitted by each host, and all hosts can receive all information (whether it is needed or not). The network device is simple, it is easy for maintenance, the cost for network deployment is low, and the traffic load of the server is very low since the server does not separately transmit data to each client.

It is to be noted that only two common messages are listed here, but the present invention is not limited to the two forms of messages. For example, there may be a multicast message. The multicast is characterized by the communication between a transmitter and multiple receivers, and is between the unicast and the broadcast.

In some examples, when the management interface receives a unicast message, the processor 801 controls the management interface to parse sub-messages contained in the unicast message to obtain a target IP address, transmit the sub-messages with the target IP address to a virtual logical device corresponding to the target IP address and discard the sub-messages without the target IP address.

It should be understood that, for a unicast message, the processor 801 controls the management interface to parses the sub-messages contained in the unicast message obtain a target IP address; and then, the sub-messages with the IP address are transmitted to a virtual logical device corresponding to the target IP address, and the sub-messages without the target IP address are directly discarded or processed in other ways. In other words, only the sub-messages that need be transmitted to the virtual logical device are transmitted, and the sub-messages that need not be transmitted to the virtual logical device are discarded, avoiding the tedious operation that the virtual logical device will discard the sub-messages even if the sub-messages are transmitted to the virtual logical device.

In other examples, when the management interface receives a broadcast message, the controller 801 controls the management interface to parse sub-messages contained in the broadcast message to obtain at least two target IP addresses, determine, according to the at least two target IP addresses, virtual logical devices to which the sub-messages are to be transmitted, and transmit the sub-messages to the corresponding virtual logical devices.

It should be understood that, for a broadcast message, the controller 801 controls the management port to parse the sub-messages contained in the broadcast message to obtain at least two target IP addresses, determine according to the target IP addresses, virtual logical devices to which the sub-messages are to be transmitted, and transmit the sub-messages to the corresponding virtual logical devices. In other words, according to the target IP addresses parsed from the sub-messages in the broadcast message, the sub-messages can be correspondingly transmitted to the virtual logical devices, avoiding the occurrence of a phenomenon that the messages of the virtual logical devices are not isolated and low in security since the sub-messages in the broadcast message are transmitted to all the virtual logical devices.

In other examples, when the management interface receives a multicast message, the processor 801 controls the management interface to parse sub-messages contained in the multicast message to obtain at least two target IP addresses, determine, according to the at least two target IP addresses, virtual logical devices to which the sub-messages are to be transmitted, transmit the sub-messages to the corresponding virtual logical devices and discard the sub-messages without the target IP addresses.

In this embodiment, before the virtual logical devices receive the sub-messages from the management interface, the controller 801 controls the virtual logical devices to create corresponding sub-message queues FIFO for the at least two virtual logical devices, respectively. That is, each virtual logical device corresponds to one sub-message queue FIFO. It should be understood that the sub-message queues FIFO are configured to receive the sub-messages from the management interface so that it is convenient for the virtual logical devices to manage the messages; and, the sub-message queues FIFO follows a rule that the sub-message received first is processed first.

In this embodiment, optionally, the processor 801 controls the sub-message queues FIFO of the virtual logical devices to receive the sub-messages from the management interface.

In this embodiment, after the sub-message queues FIFO of the virtual logical devices receive the sub-messages from the management interface, the processor 801 further controls the virtual logical devices to: prioritize the received sub-messages, the higher the importance of the sub-message, the higher the corresponding priority; and, adjust the order of the sub-messages in the sub-message queues FIFO according to the prioritization.

It should be understood that the virtual logical devices can determine the priorities of the sub-messages according to the importance of the received sub-messages. If the importance of a sub-message is higher, the corresponding priority of the sub-message is higher. For example, it is assumed that the sub-message queues FIFO include a sub-message 1, a sub-message 2, a sub-message 3, a sub-message 4 and a sub-message 5 which are received successively. Generally, the sub-messages are processed in an order of the sub-message 1, the sub-message 2, the sub-message 3, the sub-message 4 and the sub-message 5. However, if it is assumed that the sub-messages are prioritized as the sub-message 2, the sub-message 3, the sub-message 1 and the sub-message 4, the order of the sub-messages in the sub-message queues FIFO is the sub-message 2, the sub-message 3, the sub-message 1 and the sub-message 4, that is, the sub-messages are processed in an order of the sub-message 2, the sub-message 3, the sub-message 1 and the sub-message 4. Thus, it is ensured that the important sub-messages can be processed in time, and the flexibility of message processing is improved.

In this embodiment, optionally, after the virtual logical devices receive the sub-messages from the management interface, the processor 801 further controls the virtual logical devices to verify the sub-messages to obtain a result of verification.

It should be understood that the virtual logical devices verify the sub-messages to determine whether the received sub-messages are desired sub-messages in order to further improve the accuracy of the received sub-messages.

In this embodiment, optionally, when the result of verification is PASSED, the sub-messages are processed.

It should be understood that the result of verification obtained by verifying the sub-messages by the virtual logical devices has two situations. The first situation is that the result of verification is PASSED. In this situation, the sub-messages can be directly processed. Optionally, the message is processed according to the type of the message and the protocol. The second situation is that the result of verification is FAILED. In this situation, the sub-messages can be discarded or received again, or an error can be reported, or the like.

In the switch according to this embodiment of the present invention, upon receiving a message, a management interface parses sub-messages contained in the message to obtain target IP addresses, determines virtual logical devices according to the target IP addresses, and transmits the sub-messages to the corresponding virtual logical devices; and, the virtual logical devices receive the sub-messages from the management interface, so that the problem in the existing technology that there are certain potential security hazards in the communication of the management interface is solved. In other words, compared with the switches in the existing technology, in the switch according to this embodiment of the present invention, the message isolation of the virtual logical devices is realized, the occurrence of a phenomenon that the messages are miscellaneous and low in security since the messages of the virtual logical devices are not isolated is avoided, and the security of the message communication of the management interface of the whole switch is greatly improved.

In order to solve the problem in the existing technology that there are certain potential security hazards in the communication of the management interface, in an embodiment of the present invention, a computer-readable storage medium is provided. The computer-readable storage medium stores one or more programs which, when executed by one or more processors, cause the one or more processors to implement the steps in the message processing method described in embodiment one.

The storage medium includes volatile or non-volatile and removable or non-removable mediums implemented in any method or technology used for storing information (e.g., computer-readable instructions, data structures, program modules or other data). The storage medium includes, but not limited to, random access memories (RAMs), read-only memories (ROMs), electrically erasable programmable read only memories (EEPROMs), slash memories or other memory technologies, compact disc read-only memories (CD-ROMs), digital versatile disks (DVDs) or other optical disk memories, magnetic cassettes, magnetic tapes, magnetic disk memories or other magnetic memory devices, or any other mediums that can be configured to store desired information and can be accessed by computers.

Apparently, it should be understood by a person having ordinary skill in the art that all or some of the steps in the methods disclosed above and the functional modules/units in the systems and devices disclosed above can be implemented as software (which can be implemented by program codes executable by computing apparatuses), firmware, hardware and suitable combinations thereof. In the hardware implementation, the division of the functional modules/units mentioned above does not necessarily correspond to the division of physical components. For example, one physical component may have multiple functions, or one function or step may be cooperatively executed by a number of physical components. Some or all of the physical components may be implemented as software executed by processors such as central processors, digital signal processors or microprocessors, or implemented as hardware, or implemented as integrated circuits such as application-specific integrated circuits. Such software may be distributed on computer-readable mediums and executed by computing apparatuses. In addition, in some cases, the steps shown or described may be executed in an order different from the order described here. The computer-readable mediums may include computer storage mediums (or non-temporary mediums) and communication mediums (or temporary mediums). As well-known to a person having ordinary skill in the art, the term computer storage medium includes volatile or non-volatile and removable or non-removable mediums implemented in any method or technology used for storing information (e.g., computer-readable instructions, data structures, program modules or other data).

In addition, as well-known to a person having ordinary skill in the art, the communication mediums generally contain computer-readable instructions, data structures, program modules or other data in modulation data signals such as carriers or other transmission mechanisms, and may include any information transfer medium.

## Claims

1. A message processing method, applied to a switch having one management interface and at least two virtual logical devices, the message processing method being **characterised by** comprising:
parsing (S301), by the management interface in response to receiving a message, each sub-message of a plurality of sub-messages contained in the message to obtain a plurality of target IP addresses, determining virtual logical devices according to the plurality of target IP addresses, and transmitting the sub-messages to the corresponding virtual logical devices; and
receiving (S302), by the virtual logical devices, the sub-messages from the management interface.

2. The message processing method of claim 1, wherein the message comprises at least one of a unicast message or a broadcast message.

3. The message processing method of claim 2, wherein, in response to the management interface receiving a unicast message, parsing each sub-message of a plurality of sub-messages contained in the unicast message to obtain a target IP address, transmitting the sub-message with the target IP address to a virtual logical device corresponding to the target IP address, and discarding the sub-message without the target IP address.

4. The message processing method of claim 2, wherein, in response to the management interface receiving a broadcast message, parsing each sub-message of a plurality of sub-messages contained in the broadcast message to obtain at least two target IP addresses, determining, according to the at least two target IP addresses, the virtual logical device to which the sub-message is to be transmitted, and transmitting the sub-message to the corresponding virtual logical device.

5. The message processing method of any one of claims 1 to 4, before receiving (S302), by the virtual logical device, the sub-message from the management interface, further comprising:
creating corresponding sub-message queues for the at least two virtual logical devices, respectively; and
receiving, by the virtual logical device, the sub-message from the management interface comprises:
receiving, by the sub-message queue of the virtual logical device, the sub-message from the management interface.

6. The message processing method of claim 5, after receiving (S302), by the sub-message queue of the virtual logical device, the sub-message from the management interface, further comprising:
prioritizing the received plurality of sub-messages, wherein the higher the importance of the sub-message, the higher the corresponding priority; and
adjusting the order of the plurality of sub-messages in the sub-message queue according to the prioritization.

7. The message processing method of any one of claims 1 to 4, after receiving, by the virtual logical device, the sub-message from the management interface, further comprising:
verifying the sub-message to obtain a result of verification.

8. The message processing method of claim 7, wherein, in response to the result of verification being passed, processing the sub-message.

9. A switch, comprising a processor (801), a memory (802) and a communication bus (803);
the communication bus (803) is configured to realize a communication between the processor (801) and the memory (802); and
the processor (801) is configured to execute one or more programs stored in the memory (802) so as to perform the message processing method of any one of claims 1 to 8.

10. A computer-readable storage medium, storing one or more programs which, when executed by one or more processors, cause the one or more processors to perform the message processing method of any one of claims 1 to 8.

## Patentansprüche

1. Nachrichtenverarbeitungsverfahren, angewandt auf einen Switch, der eine Managementschnittstelle und mindestens zwei virtuellen logische Vorrichtungen aufweist, wobei das Nachrichtenverarbeitungsverfahren **dadurch gekennzeichnet ist, dass** es Folgendes umfasst:
Parsen (S301), durch die Managementschnittstelle als Reaktion auf ein Empfangen einer Nachricht, jeder Teilnachricht einer Vielzahl von Teilnachrichten, die in der Nachricht enthalten sind, um eine Vielzahl von Ziel-IP-Adressen zu erlangen, Bestimmen virtueller logischer Vorrichtungen gemäß der Vielzahl von Ziel-IP-Adressen und Übertragen der Teilnachrichten an die entsprechenden virtuellen logischen Vorrichtungen; und
Empfangen (S302), durch die virtuellen logischen Vorrichtungen, der Teilnachrichten von der Managementschnittstelle.

2. Nachrichtenverarbeitungsverfahren nach Anspruch 1, wobei die Nachricht mindestens eine von einer Unicast-Nachricht oder eine Broadcast-Nachricht umfasst.

3. Nachrichtenverarbeitungsverfahren nach Anspruch 2, umfassend, als Reaktion darauf, dass die Managementschnittstelle eine Unicast-Nachricht empfängt, Parsen jeder Teilnachricht einer Vielzahl von Teilnachrichten, die in der Unicast-Nachricht enthalten sind, um eine Ziel-IP-Adresse zu erlangen, Übertragen der Teilnachricht mit der Ziel-IP-Adresse an eine virtuelle logische Vorrichtung, die der Ziel-IP-Adresse entspricht, und Verwerfen der Teilnachricht ohne die Ziel-IP-Adresse.

4. Nachrichtenverarbeitungsverfahren nach Anspruch 2, umfassend, als Reaktion darauf, dass die Managementschnittstelle eine Broadcast-Nachricht empfängt, Parsen jeder Teilnachricht einer Vielzahl von Teilnachrichten, die in der Broadcast-Nachricht enthalten sind, um mindestens zwei Ziel-IP-Adressen zu erlangen, Bestimmen, gemäß den mindestens zwei Ziel-IP-Adressen, der virtuellen logischen Vorrichtung, an die die Teilnachricht übertragen werden soll, und Übertragen der Teilnachricht an die entsprechende virtuelle logische Vorrichtung.

5. Nachrichtenverarbeitungsverfahren nach einem der Ansprüche 1 bis 4, das vor Empfangen (S302), durch die virtuelle logische Vorrichtung, der Teilnachricht von der Managementschnittstelle ferner Folgendes umfasst:
Erzeugen entsprechender Teilnachricht-Warteschlangen für die jeweils mindestens zwei virtuellen logischen Vorrichtungen; und
wobei ein Empfangen, durch die virtuelle logische Vorrichtung, der Teilnachricht von der Managementschnittstelle Folgendes umfasst:
Empfangen, durch die Teilnachricht-Warteschlange der virtuellen logischen Vorrichtung, der Teilnachricht von der Managementschnittstelle.

6. Nachrichtenverarbeitungsverfahren nach Anspruch 5, das nach Empfangen (S302), durch die Teilnachrichten-Warteschlange der virtuellen logischen Vorrichtung, der Teilnachricht von der Managementschnittstelle ferner Folgendes umfasst:
Priorisieren der empfangenen Vielzahl von Teilnachrichten, wobei die entsprechende Priorität umso höher ist, je höher die Wichtigkeit der Teilnachricht ist; und
Anpassen der Reihenfolge der Vielzahl von Teilnachrichten in der Teilnachricht-Warteschlange gemäß der Priorisierung.

7. Nachrichtenverarbeitungsverfahren nach einem der Ansprüche 1 bis 4, das nach Empfangen, durch die virtuelle logische Vorrichtung, der Teilnachricht von der Managementschnittstelle ferner Folgendes umfasst:
Verifizieren der Teilnachricht, um ein Verifizierungsresultat zu erlangen.

8. Nachrichtenverarbeitungsverfahren nach Anspruch 7, umfassend, als Reaktion darauf, dass das Verifizierungsresultat bestanden ist, Verarbeiten der Teilnachricht.

9. Switch, umfassend einen Prozessor (801), einen Speicher (802) und einen Datenübertragungsbus (803);
wobei der Datenübertragungsbus (803) konfiguriert ist, um eine Kommunikation zwischen dem Prozessor (801) und dem Speicher (802) zu realisieren; und
der Prozessor (801) konfiguriert ist, um ein oder mehrere in dem Speicher (802) gespeicherte Programme auszuführen, um das Nachrichtenverarbeitungsverfahren nach einem der Ansprüche 1 bis 8 durchzuführen.

10. Computerlesbares Speichermedium, das ein oder mehrere Programme speichert, die, wenn sie von einem oder mehreren Prozessoren ausgeführt werden, den einen oder die mehreren Prozessoren veranlassen, das Nachrichtenverarbeitungsverfahren nach einem der Ansprüche 1 bis 8 durchzuführen.

## Revendications

1. Procédé de traitement des messages, appliqué à un commutateur disposant d'une interface de gestion et d'au moins deux dispositifs logiques virtuels, le procédé de traitement des messages étant **caractérisé en ce qu'**il comprend :
l'analyse (S301), par l'interface de gestion en réponse à la réception d'un message, de chaque sous-message d'une pluralité de sous-messages contenus dans le message pour obtenir une pluralité d'adresses IP cibles, la détermination des dispositifs logiques virtuels en fonction de la pluralité d'adresses IP cibles et la transmission des sous-messages aux dispositifs logiques virtuels correspondants ; et
la réception (S302), par les dispositifs logiques virtuels, des sous-messages depuis l'interface de gestion.

2. Procédé de traitement des messages selon la revendication 1, dans lequel le message comprend au moins un message de monodiffusion ou un message de diffusion.

3. Procédé de traitement des messages selon la revendication 2, dans lequel, en réponse à la réception d'un message de monodiffusion par l'interface de gestion, chaque sous-message d'une pluralité de sous-messages contenus dans le message de monodiffusion est analysé afin d'obtenir une adresse IP cible, puis le sous-message est transmis avec l'adresse IP cible à un dispositif logique virtuel correspondant à l'adresse IP cible, et le sous-message est rejeté sans l'adresse IP cible.

4. Procédé de traitement des messages selon la revendication 2, dans lequel, en réponse à la réception d'un message de diffusion par l'interface de gestion, chaque sous-message d'une pluralité de sous-messages contenus dans le message de diffusion est analysé afin d'obtenir au moins deux adresses IP cibles, le dispositif logique virtuel auquel le sous-message doit être transmis est déterminé en fonction des deux adresses IP cibles au moins, et le sous-message est transmis au dispositif logique virtuel correspondant.

5. Procédé de traitement des messages selon l'une quelconque des revendications 1 à 4 avant la réception (S302), par le dispositif logique virtuel, du sous-message depuis l'interface de gestion, comprenant en outre:
la création des files de sous-messages pour les deux dispositifs logiques virtuels au moins, respectivement ; et
la réception, par le dispositif logique virtuel, du sous-message depuis l'interface de gestion, comprenant :
la réception, par la file de sous-messages du dispositif logique virtuel, du sous-message depuis l'interface de gestion.

6. Procédé de traitement des messages selon la revendication 5, après réception (S302), par la file des sous-messages du dispositif logique virtuel, des sous-messages depuis l'interface de gestion, comprenant en outre:
la priorisation de la pluralité de sous-messages reçus, dans laquelle plus élevée est l'importance du sous-message, plus élevée est la priorité correspondante; et
l'ajustement de l'ordre de la pluralité de sous-messages dans la file de sous-message selon la priorisation.

7. Procédé de traitement des messages selon l'une quelconque des revendications 1 à 4 après la réception, par le dispositif logique virtuel, des sous-messages depuis l'interface de gestion, comprenant en outre:
la vérification du sous-message afin d'obtenir un résultat de vérification.

8. Procédé de traitement des messages selon la revendication 7, dans lequel, en réponse au résultat de la vérification en cours, le traitement du message se poursuit.

9. Commutateur, comprenant un processeur (801), une mémoire (802) et un bus de communication (803);
le bus de communication (803) est configuré pour effectuer une communication entre le processeur (801) et la mémoire (802); et
le processeur (801) est configuré pour exécuter un ou plusieurs programmes stockés dans la mémoire (802) afin d'effectuer le procédé de traitement des messages selon l'une quelconque des revendications 1 à 8.

10. Support de stockage lisible par ordinateur, stockant un ou plusieurs programmes qui, lorsqu'ils sont exécutés par un ou plusieurs processeurs, amènent le ou les processeurs à exécuter le procédé de traitement des messages selon l'une quelconque des revendications 1 à 8.
